# NEUE EUROPÄISCHE PATENTSCHRIFT

(11) **EP 2 867 012 B2**
(45) Veröffentlichungstag und Bekanntmachung des Hinweises auf die Entscheidung über den Einspruch: **22.07.2020**
(45) Hinweis auf die Patenterteilung: 13.09.2017
(21) Anmeldenummer: 13730274.1
(22) Anmeldetag: 21.06.2013
(51) Int. Cl.: B32B 5/16, B32B 5/26, B32B 23/02, B32B 23/04, B32B 23/10, H01B 13/08, H01B 3/52, B32B 7/12, B32B 23/08, H01F 27/32

(54) **ISOLATIONSELEMENT ZUR ELEKTRISCHEN ISOLATION IM HOCHSPANNUNGSBEREICH**
ISOLATION ELEMENT FOR ELECTRICAL ISOLATION IN THE HIGH VOLTAGE RANGE
ELÉMENT D'ISOLATION ÉLECTRIQUE DANS LA ZONE DE LA HAUTE TENSION

(30) Priorität: 29.06.2012 EP 12174348
(43) Veröffentlichungstag der Anmeldung: 06.05.2015
(73) Patentinhaber: Weidmann Holding AG, 8640 Rapperswil (CH)
(72) Erfinder: EXNER, Wolfgang, CH-8735 St. Gallenkappel (CH); WOLFINGER, Tobias, 8730 Uznach (CH)
(74) Vertreter: Rutz, Andrea
(86) Internationale Anmeldenummer: PCT/EP2013/063051
(87) Internationale Veröffentlichungsnummer: WO 2014/001223

(56) Entgegenhaltungen:
- EP-A2- 1 150 313
- WO-A1-2011/056135
- WO-A1-2012/003166
- US-A- 3 710 293
- C. TANG: "Space charge behavior in multi-layer oil-paper insulation under different DC voltages and temperatures", IEEE TRANSACTIONS ON DIELECTRICS AND ELECTRICAL INSULATION, vol. 17, no. 3, June 2010 (2010-06), pages 775-784,
- N. LAVOINE et al.: "Microfibrillated cellulose - Its barrier properties and applications in cellulosic materials: A review", Carbohydrate Polymers, vol. 90, no. 2 1 June 2012 (2012-06-01), pages 735-764, Retrieved from the Internet: URL:https://doi.org/10.1016/j.carbpol. 2012.05.02 6
- JAMES H. HARLOW: "Electric Power Transformer Engineering'', Third Edition", Electric power engineering handbook, 16 May 2012 (2012-05-16), page 693,
- P. J. FERREIRA et al.: "Size Characterization of Fibres and Fines in Hardwood Kraft Pulps", Particle & Particle Systems Characterization, vol. 16, no. 1, 1999, pages 20-24,
- M. GARCA CARVALHO et al.: "A comparative study of two automated techniques for measuring fiber length", Tappi Journal, vol. 80, no. 2, 1997, pages 137-142,
- E. KELK et al.: "Constitution and properties ofpaper for high- voltage dielectrics", PROC. IEE, vol. 112, no. 3, March 1965 (1965-03), pages 602-612,
- H. HOLIK: In: "Handbook of Paper and Board", 2006
- M. SCHAIBLE: "Electrical Insulating papers - an Overview", IEEE Electrical Insulation Magazine, vol. 3, no. 1, January 1987 (1987-01), pages 8-12,
- Arbocel
- IEC 60641-3-1
- IEC Standard 60554-2, Cellulosic papers for electrical purposes Part 2: Methods of test, 2001
- Aulin et al: "Oxygen and oil barrier properties of microfibrillated cellulose films and coatings", Cellulose, vol. 17, 10 January 2010 (2010-01-10), pages 559-574,
- Affidavit von Prof. Lars Wagberg
- Cellulose and its derivatives: Chemistry, Biochemistry and applications, 1985
- Haftvermittlung von Polyelektrolyten zwischen Celluloseoberflächen, 2005
- Novel functional materials bassed on cellulose, 2017
- Interactions of microfibrillated cellulose and cellulosic fines with cationic polyelectrolyted, 2010
- Fundamentals of papermaking fibres, 1957
- Colloidal stability of aqueous nanofibrillated cellulose dispersions, 2011
- Mikrofibrillär cellulosa som komponent vid paperstillverkning, 1988

## Beschreibung

### TECHNISCHES GEBIET

Die vorliegende Erfindung betrifft ein Isolationselement zur elektrischen Isolation eines elektrotechnischen Bauelements im Hochspannungsbereich, einen Transformator mit einem derartigen Isolationselement, ein Verfahren zur Herstellung eines derartigen Isolationselementes, sowie die Verwendung eines Isolationselementes zur elektrischen Isolation eines elektrotechnischen Bauelements.

### STAND DER TECHNIK

Seit langem werden Isolationselemente aus cellulosehaltigen Naturfasern, im Folgenden Zellstoff genannt, hergestellt und zur elektrischen Isolation von elektrotechnischen Bauelementen verwendet. Bei diesen cellulosehaltigen Naturfasern kann es sich zum Beispiel um Papier, Baumwolltuch, Baumwollband, Presswatte oder Holz handeln. Insbesondere bei Transformatoren kommen häufig Cellulose enthaltende Isolationselemente zum Einsatz, die aus Zellstoff bestehen, da Cellulose ausgezeichnete dielektrische Eigenschaften und eine ausreichende Durchschlagsfestigkeit aufweist und zudem als nachwachsender Rohstoff sehr gut verfügbar und deshalb kostengünstig ist. Ausserdem weisen aus Zellstoff hergestellte Isolationselemente üblicherweise eine gute Imprägnierbarkeit mit Transformatorenöl auf, welches insbesondere im Transformatorgehäuse ölisolierter Transformatoren sowohl zur Isolation der Wicklungen als auch zur Kühlung dient.

Ein Beispiel für ein derartiges Isolationselement aus Zellstoff ist das seit langem bekannte Produkt "Transformerboard TIV", welches von der Firma Weidmann vertrieben wird. Ein Isoliersystem zur Verwendung in hermetischen Transformatoren, welches auf Cellulose sowie einer Kühl- und Isolierflüssigkeit basiert, ist in der DE 199 11 579 offenbart. Die CH 579 812 beschreibt ebenfalls Isolierstoffe aus Cellulose zur Verwendung in der Elektroindustrie.

Zu den wünschenswerten Eigenschaften eines Isolationselements für den Hochspannungsbereich gehören neben einer niedrigen Dielektrizitätskonstante und den geringen Herstellungskosten eine gute thermische Stabilität von bevorzugt bis 120° C, eine ausreichende Porosität für die Ölaufnahme, eine geringe Quellung in Transformatorenöl, eine geringe Wärmeausdehnung, die hohe mechanische Stabilität sowie insbesondere eine gute Teilentladungs- und Durchschlagsfestigkeit. Diese Eigenschaften des Isolationselements sollten möglichst unabhängig von der Betriebslaufzeit des Isolationselements sein.

Um auf Zellstoff basierte Isolationselemente ab einer bestimmten Dicke zu realisieren, werden diese üblicherweise mehrlagig hergestellt. Dazu werden im Stand der Technik meist jeweils zwei Transformerboard-Schichten mittels eines Caseinklebers oder eines Polyesterharzes oder Epoxi- oder Phenolharzklebers miteinander verbunden.

Eine Isolierung, welche aus vielen Schichten Papierband besteht, ist beispielsweise in der DE 24 43 398 offenbart. In der DE 30 00 418 wird die Herstellung eines Isolationselements beschrieben, bei welchem ein Epoxyharz zur Verbindung von jeweils zwei Cellulose-Schichten verwendet wird. Weitere mehrlagige und auf Cellulose basierte Isolationselemente sind in der WO 2012/003166 und in der EP 1 150 313 offenbart.

Problematisch bei derartigen mehrlagigen Isolationselementen des Standes der Technik ist, dass die zur Verbindung der Schichten dienenden Stoffe, wie Caseinkleber oder Polyesterharz, nicht oder kaum mit dem Transformatorenöl imprägnierbar sind und zudem eine Barriere für das Öl bilden. In derartigen Isolationselementen werden deshalb oft Imprägnier- und Trocknungsbohrungen vorgesehen, was aufwendig ist und zu einem hohen Bohrerverschleiss führt. Ausserdem verlängert sich aufgrund der Barrierewirkung des Klebstoffes die Zeit zum Imprägnieren des Isolationselementes mit dem Transformatorenöl, wodurch die Herstellung des Transformators insgesamt verlängert und somit verteuert wird. Dies wirkt sich insbesondere auch auf Reparaturen des Transformators aus, wenn dieser dabei entölt werden muss. Des Weiteren können Caseinkleber sowie Polyesterharz Mikroluftblasen sowie Kavitäten einschliessen, welche zu unerwünschten Teilentladungen im Isolationselement führen können. Die Verwendung von unterschiedlichen Materialien führt zudem aufgrund der notwendigen Materialseparierung zu einer aufwendigen und teuren Entsorgung derartiger Isolationselemente.

### DARSTELLUNG DER ERFINDUNG

Es ist also eine Aufgabe der vorliegenden Erfindung, ein einfach herstellbares, mehrlagiges Isolationselement mit guten Isolationseigenschaften anzugeben, welches möglichst gleichmässig und schnell mit einem fliessfähigen und insbesondere im Hochspannungsbereich elektrisch isolierend wirkendem Material, wie insbesondere Transformatorenöl, imprägnierbar ist. Das Isolationselement sollte zudem einfach entsorgbar sein. Zur Lösung dieser Aufgabe wird ein Isolationselement vorgeschlagen, wie es in Anspruch 1 angegeben ist. Ausserdem wird in Anspruch 14 ein Transformator mit einem derartigen Isolationselement sowie in Anspruch 15 ein Verfahren zur Herstellung eines derartigen Isolationselements angegeben. In Anspruch 18 wird zudem die Verwendung eines solchen Isolationselements zur elektrischen Isolation eines elektrotechnischen Bauelements angegeben. Vorteilhafte Ausgestaltungen der Erfindung sind in den abhängigen Ansprüchen angegeben.

Die vorliegende Erfindung stellt also ein Isolationselement nach einem der Ansprüche 1-13, insbesondere ein flächiges Isolationselement, zur elektrischen Isolation eines elektrotechnischen Bauelements im Hochspannungsbereich zur Verfügung, aufweisend
eine erste Schicht, welche Cellulose enthält;
eine zweite Schicht, welche Cellulose enthält; sowie
eine zwischen der ersten Schicht und der zweiten Schicht angeordnete Zwischenschicht, welche mikro- und/oder nanoskalige Cellulose enthält.

Die vorliegende Erfindung stellt ausserdem die Verwendung eines Isolationselements zur elektrischen Isolation eines elektrotechnischen Bauelements nach einem der Ansprüche 18 oder 19 zur Verfügung, wobei das Isolationselement aufweist
eine erste Schicht, welche Cellulose enthält,
eine zweite Schicht, welche Cellulose enthält, sowie
eine zwischen der ersten Schicht und der zweiten Schicht angeordnete Zwischenschicht, welche mikro- und/oder nanoskalige Cellulose enthält.

Durch die Verwendung von mikro- und/oder nanoskaliger Cellulose als Zwischenschicht kann insbesondere eine Verbindung der ersten und zweiten Schicht erreicht werden, welche bei der Imprägnierung des Isolationselements für das Transformatorenöl durchgängig ist. Die nanoskalige Cellulose kann insbesondere auch als Nanocellulose bezeichnet werden. Die Zwischenschicht ist aufgrund der Porosität von mikro- und/oder nanoskaliger Cellulose ebenso wie die erste und die zweite Schicht mit Transformatorenöl imprägnierbar, wodurch eine schnelle und sichere Befüllung bzw. Entölung eines Transformators sichergestellt werden kann. Die Verwendung von mikro- und/oder nanoskaliger Cellulose erlaubt zudem eine Herstellung der Zwischenschicht mittels eines ökologischen, universell verfügbaren sowie kostengünstigen Rohstoffs. Insbesondere ist das Vorsehen von Imprägnierbohrungen und/oder Trocknungsbohrungen bei einer derartig ausgebildeten Zwischenschicht des Isolationselements nicht notwendig. Die Zwischenschicht des Isolationselements mit mikro- und/oder nanoskaliger Cellulose als Zwischenschicht weist ausserdem in der Regel eine sehr hohe Teilentladungsfestigkeit auf, die eine optimale Dimensionierung des Transformatordesigns zulässt.

Bevorzugt wird das Isolationselement zur elektrischen Isolation im Hochspannungsberiech verwendet. Es kann aber auch zur Isolation bei Spannungen unterhalb des Hochspannungsbereichs verwendet werden. Zum Hochspannungsbereich werden üblicherweise Wechselspannungen mit einem Effektivwert von zumindest 1000 Volt sowie Gleichspannungen von zumindest 1500 Volt gezählt. Bevorzugt ist das Isolationselement sogar derart ausgebildet, dass es bei beliebigen Spannungen bis zu 100 kV, und insbesondere bevorzugt bis zu 1200 kV, elektrisch isolierend wirkt.

Mikroskalige bzw. nanoskalige Cellulose kann aus einem beliebigen Cellulose-haltigen Material hergestellt werden. Beispielsweise kann die mikro- bzw. nanoskalige Cellulose aus Holz, Zuckerrübe, Kartoffel, Hanf, Flachs, Baumwolle, Weizenstroh, Cellulose aus Algen oder Cellulose aus Bakterien hergestellt werden. Normalerweise wird mikro- bzw. nanoskalige Cellulose aber aus Holz hergestellt. Die Herstellung von mikro- und nanoskaliger Cellulose ist dem Fachmann bekannt. Bei der in der Zwischenschicht verwendeten mikro- bzw. nanoskaligen Cellulose liegen zumindest 50 % der individuellen Mikrofibrillen teilweise oder gänzlich voneinander gelöst vor. Üblicherweise weist ein Grossteil der individuellen Mikrofibrillen von nanoskaliger Cellulose einen Durchmesser im Bereich von lediglich 1 nm bis 20 nm auf. Üblicherweise weist ein Grossteil der individuellen Mikrofibrillen von mikroskaliger Cellulose einen Durchmesser im Bereich von lediglich 10 nm bis 100 nm auf.

Zur Herstellung der mikro- bzw. nanoskaligen Cellulose wird beispielsweise basierend auf dem Cellulose-haltigen Material ein Zellstoff aufbereitet. Der Zellstoff wird dann beispielsweise einem mechanischen Druck mit vorangehender oder nachfolgender chemischer oder enzymatischer Behandlung ausgesetzt. Gemäss einer anderen Variante wird die mikro- bzw. nanoskalige Cellulose hergestellt, indem das Cellulose-haltige Material einer sauren Hydrolyse und einer darauffolgenden Ultraschallbehandlung unterzogen wird. Gemäss einer weiteren Variante wird die mikro- bzw. nanoskalige Cellulose mittels bakterieller Synthese gewonnen.

Die Längen der individuellen Mikrofibrillen von mikroskaliger Cellulose sind über einen grossen Bereich zwischen 500 nm und 1000 µm verteilt. Im Wesentlichen weisen 100% der individuellen Mikrofibrillen von mikroskaliger Cellulose eine Länge zwischen 500 nm und 1000 µm auf. Bevorzugter weisen aber zumindest 80 %, insbesondere bevorzugt zumindest 90 %, noch bevorzugter im Wesentlichen 100% der individuellen Mikrofibrillen von mikroskaliger Cellulose eine Länge zwischen 500 nm und 800 µm auf. Noch bevorzugter weisen aber zumindest 80 %, insbesondere bevorzugt zumindest 90 %, noch bevorzugter im Wesentlichen 100% der individuellen Mikrofibrillen von mikroskaliger Cellulose eine Länge zwischen 500 nm und 600 µm auf. Noch mehr bevorzugt weisen aber zumindest 80 %, insbesondere bevorzugt zumindest 90 %, noch bevorzugter im Wesentlichen 100% der individuellen Mikrofibrillen von mikroskaliger Cellulose eine Länge zwischen 500 nm und 400 µm auf. Am meisten bevorzugt weisen aber zumindest 80 %, insbesondere bevorzugt zumindest 90 %, noch bevorzugter im Wesentlichen 100% der individuellen Mikrofibrillen von mikroskaliger Cellulose eine Länge zwischen 500 nm und 200 µm auf. Bei Verwendung von mikroskaliger Cellulose mit derartig dimensionierten individuellen Mikrofibrillen weist das Isolationselement insbesondere optimale Eigenschaften auf, was die Imprägnierbarkeit der Zwischenschicht mit Öl und was den inneren Zusammenhalt der Zwischenschicht sowie der Zusammenhalt der Zwischenschicht mit der ersten und der zweiten Schicht angeht.

Die Längen der individuellen Mikrofibrillen von nanoskaliger Cellulose sind über einen grossen Bereich zwischen 5 nm und 500 nm verteilt. Im Wesentlichen weisen 100% der individuellen Mikrofibrillen von nanoskaliger Cellulose eine Länge von 5 nm bis 500 nm auf. Bei Verwendung von nanoskaliger Cellulose mit derartig dimensionierten individuellen Mikrofibrillen weist das Isolationselement insbesondere optimale Eigenschaften auf, was die Imprägnierbarkeit der Zwischenschicht mit Öl und was den inneren Zusammenhalt der Zwischenschicht sowie der Zusammenhalt der Zwischenschicht mit der ersten und der zweiten Schicht angeht.

Bei Verwendung einer Mischung von mikroskaliger und nanoskaliger Cellulose mit wie oben beschrieben dimensionierten individuellen Mikrofibrillen weist das Isolationselement insbesondere optimale Eigenschaften auf, was die Imprägnierbarkeit der Zwischenschicht mit Öl und was den inneren Zusammenhalt der Zwischenschicht sowie der Zusammenhalt der Zwischenschicht mit der ersten und der zweiten Schicht angeht.

Vorteilhaft weisen zumindest 50 %, bevorzugt zumindest 80 %, insbesondere bevorzugt zumindest 90 %, noch bevorzugter im Wesentlichen 100 %, der individuellen Mikrofibrillen der mikro- und/oder nanoskaligen Cellulose eine Länge im Bereich von 50 nm bis 80 µm auf. Die Dicke der individuellen Mikrofibrillen liegt üblicherweise bei einem Grossteil der Mikrofibrillen in einem Bereich von 15 nm bis 25 nm, insbesondere bei ca. 20 nm. Bei Verwendung von mikro- und/oder nanoskaliger Cellulose mit derartig dimensionierten individuellen Mikrofibrillen weist das Isolationselement insbesondere optimale Eigenschaften auf, was die Imprägnierbarkeit der Zwischenschicht mit Öl und was den inneren Zusammenhalt der Zwischenschicht sowie der Zusammenhalt der Zwischenschicht mit der ersten und der zweiten Schicht angeht.

Grundsätzlich kann für die mikroskalige als auch für die nanoskalige Cellulose Folgendes gesagt werden: Je kürzer die Länge der individuellen Mikrofibrillen ist, desto grösser ist die Oberfläche der individuellen Mikrofibrillen. Somit kann eine Zwischenschicht mit kürzeren individuellen Mikrofibrillen, aufgrund der grösseren Oberfläche der individuellen Mikrofibrillen, eine erste und eine zweite Schicht stärker zusammenhalten als eine Zwischenschicht, welche individuelle Mikrofibrillen enthält, welche vergleichsweise längere individuelle Mikrofibrillen enthält.

In einer insbesondere bevorzugten Ausführungsform enthält die Zwischenschicht nanoskalige Cellulose. Nanoskalige Cellulose weist im Vergleich zu Cellulose, welche im Vergleich zu nanoskaliger Cellulose längere individuelle Mikrofibrillen aufweist, wie beispielsweise mikroskalige Cellulose, eine grössere Oberfläche auf. Die nanoskalige Cellulose enthaltende Zwischenschicht kann, aufgrund der grösseren Oberfläche, die erste Schicht und die zweite Schicht vergleichweise stärker zusammenhalten als Cellulose, welche längere individuelle Mikrofibrillen aufweist als nanoskalige Cellulose, wie beispielsweise mikroskalige Cellulose.

Die erste und zweite Schicht können neben Cellulose auch Cellulosederivate, wie zum Beispiel Methylcellulose, Celluloseacetat oder Cellulosenitrat enthalten. Die erste und zweite Schicht können zudem auch mikro- und/oder nanoskalige Cellulose enthalten. In der ersten und der zweiten Schicht, aber auch in der Zwischenschicht, können selbstverständlich neben Cellulose eine beliebige Anzahl weiterer Materialien enthalten sein. So können beispielsweise insbesondere die erste und/oder die zweite Schicht neben Cellulose auch Polyolefine (insbesondere Polyethylen), Polysulfon, Polyesterharz, Keramik, Aramid, Polytetrafluorethylen, Amylose, Amylopektin, Stärke, Algin, Pektin, Carrageenan, Johannisbrotkernmehl, Xanthan, Guaran, Agar, Furcellaran, Carboxymethylcellulose (CMC) und/oder Tamarindenextrakt enthalten.

Das Isolationselement kann eine Vielzahl weiterer Schichten aufweisen, welche jeweils Cellulose enthalten, und zwischen welchen jeweils Zwischenschichten angeordnet sind, die mikro- und/oder nanoskalige Cellulose enthalten.

Die in der Zwischenschicht enthaltene mikro- und/oder nanoskalige Cellulose kann zu unterschiedlichen Zwecken dienen. Sie kann beispielsweise dazu dienen, Stoffe aufzunehmen, wie zum Beispiel ein Harz, das bei der Herstellung des Isolationselements jeweils zwischen zwei Cellulose enthaltenden Schichten anfällt, um insbesondere die Ausbildung einer Reinharzschicht zu vermeiden. Vorzugsweise dient die in der Zwischenschicht enthaltene mikro- und/oder nanoskalige Cellulose aber dazu, die erste Schicht und die zweite Schicht zusammenzuhalten. Insbesondere bevorzugt basiert das Zusammenhalten der Schichten dabei vorwiegend auf Wasserstoffbrücken und/oder Vander-Waals-Kräften, welche im Verbindungsbereich zwischen der Zwischenschicht und der ersten bzw. der zweiten Schicht ausgebildet werden. Das Zusammenhalten der Schichten kann aber auch hauptsächlich auf einer mechanischen Verkrallung der Schichten untereinander basieren. Dadurch, dass die mikro- und/oder nanoskalige Cellulose dazu dient, die erste und die zweite Schicht zusammenzuhalten, ist es möglich, ohne Verwendung eines Klebstoffes, wie Caseinkleber oder Polyesterharz, ein mehrlagiges Isolationselement herzustellen. Selbstverständlich ist auch denkbar, dass die Zwischenschicht neben mikro- und/oder nanoskalige Cellulose noch Klebstoff, wie insbesondere Caseinkleber oder Polyesterharz oder ein Epoxiharzkleber oder Phenolharzkleber, enthält. Vorteilhaft enthält die Zwischenschicht jedoch keinen Klebstoff.

Die Zwischenschicht enthält mindestens 50 Gew.-% (Gewichtsprozent) an mikro- und/oder nanoskaliger Cellulose, bevorzugt sogar mindestens 60 Gew.-%, noch bevorzugter mindestens 70 Gew.-% oder sogar mindestens 80 Gew.-%, und am meisten bevorzugt sogar 100 Gew.-%, bezogen auf das Gesamtgewicht der Zwischenschicht im Trockenzustand, das heisst unter Ausschluss von Öl und Wasser. Ein grosser Anteil an mikro- und/oder nanoskaliger Cellulose in der Zwischenschicht entsprechend den oben erwähnten Mengen bewirkt insbesondere eine gute Imprägnierbarkeit der Zwischenschicht mit Transformatorenöl sowie einen guten Zusammenhalt der Zwischenschicht sowohl intern als auch mit der ersten und zweiten Schicht. Vorteilhaft enthält die Zwischenschicht weniger als 1 % Hemicellulose und / oder weniger als 1 % Lignin bezogen auf das Gesamtgewicht der Zwischenschicht im Trockenzustand. Noch vorteilhafter enthält die Zwischenschicht sogar weder Hemicellulose noch Lignin.

Gemäss einer Weiterbildung der Erfindung enthält die erste Schicht mindestens 50 Gew.-%, bevorzugt mindestens 75 Gew.-% und insbesondere bevorzugt sogar mindestens 90 Gew.-% an Cellulose, bezogen auf das Gesamtgewicht der ersten Schicht im Trockenzustand. Gemäss einer Weiterbildung der Erfindung enthält zudem auch die zweite Schicht mindestens 50 Gew.-%, bevorzugt mindestens 75 Gew.-% und insbesondere bevorzugt sogar mindestens 90 Gew.-% an Cellulose, bezogen auf das Gesamtgewicht der zweiten Schicht im Trockenzustand. Am meisten bevorzugt enthalten sowohl die erste als auch die zweite Schicht ausschliesslich reine Cellulose ohne jede weiteren Stoffe.

Gemäss einer Weiterbildung der Erfindung werden die erste Schicht und/oder die zweite Schicht unter Verwendung von Zellstoff oder Holzstoff oder Altpapier hergestellt. Bevorzugt enthält die erste Schicht und/oder die zweite Schicht Zellstoff oder Holzstoff oder Altpapier. Die Gewinnung von Zellstoff und Holzstoff aus Cellulose-haltigen Materialien ist dem Fachmann bekannt. Während Holzstoff aus Holz gewonnen wird, kann der Zellstoff aus einem beliebigen Cellulose-haltigen Material gewonnen werden. Bevorzugt wird der Zellstoff aus Holz oder aus Einjahrespflanzen, wie zum Beispiel Baumwolle, gewonnen.

Gemäss einer Weiterbildung der Erfindung enthält die erste Schicht mindestens 50 Gew.-%, bevorzugt mindestens 75 Gew.-% und insbesondere bevorzugt sogar mindestens 90 Gew.-% an Zellstoff, bezogen auf das Gesamtgewicht der ersten Schicht im Trockenzustand. Gemäss einer Weiterbildung der Erfindung enthält zudem auch die zweite Schicht mindestens 50 Gew.-%, bevorzugt mindestens 75 Gew.-% und insbesondere bevorzugt sogar mindestens 90 Gew.-% an Zellstoff, bezogen auf das Gesamtgewicht der zweiten Schicht im Trockenzustand. Am meisten bevorzugt enthalten sowohl die erste als auch die zweite Schicht 100 Gew.-% Zellstoff ohne jede weiteren Stoffe.

Vorteilhaft enthalten somit die erste Schicht, die zweite Schicht und die Zwischenschicht vor einer Imprägnierung mit Öl jeweils ausschliesslich Zellstoff, am vorteilhaftesten jeweils ausschliesslich Cellulose. Insbesondere vorteilhaft besteht das gesamte Isolationselement vor einer Imprägnierung mit Öl im Wesentlichen ausschliesslich aus Cellulose, noch vorteilhafter ausschliesslich aus Cellulose. Der Vorteil eines derartig ausgebildeten Isolationselements ist insbesondere dessen sehr einfache Entsorgung, da vorgängig zur Entsorgung keine Materialseparierung notwendig ist. Bei einem möglichst homogenen Aufbau des Isolationselements kann dieses zudem räumlich beliebig verbaut werden, da der Schichtaufbau des Isolationselements in Bezug auf die elektrischen Feldlinien dann weniger oder gar nicht berücksichtigt werden muss. Die Isolationseigenschaften des Isolationselements können dann insbesondere unabhängig davon sein, in welchem Winkel die Feldlinien relativ zu den Schichten verlaufen.

Bevorzugt liegen die erste Schicht und/oder die zweite Schicht in Form von Pressplatten vor.

Gemäss einer Weiterbildung der Erfindung haben die erste Schicht, die zweite Schicht und die Zwischenschicht eine gemeinsame durchschnittliche Dichte von zumindest 0,8 g/cm³ (Gramm pro Kubikzentimeter), bevorzugter von zumindest 1,0 g/cm³, und am meisten bevorzugt von zumindest 1,2 g/cm³, oder sogar von 1,3 g/cm³. Die gemeinsame durchschnittliche Dichte der drei genannten Schichten beträgt üblicherweise jedoch höchstens 1,4 g/cm³. Die Dichte wird dabei insbesondere gemäss der internationalen Norm IEC 60763-2-10, 2. Ausgabe, 15. Februar 2007, bestimmt. Während bei einer zu geringen Dichte die elektrische und mechanische Festigkeit des Isolationselements beeinträchtigt ist, führt eine zu hohe Dichte zu einem zu geringen Porenvolumen und einer entsprechend schlechten Imprägnierbarkeit des Isolationselements mit Transformatorenöl. Eine genügend hohe Dichte des Isolationselements ist zudem wichtig, um die Herstellung des Isolationselements als selbsttragendes Bauteil zu ermöglichen.

Bevorzugt haben die erste Schicht, die zweite Schicht und die Zwischenschicht gemeinsam ein durchschnittliches Porenvolumen von 5 bis 40 %, insbesondere von 10 bis 20 %, wobei die Messung des Porenvolumens via die Ölabsorption gemäss der internationalen Norm IEC 60763-2-13, 2. Ausgabe, 15. Februar 2007, ermittelt wird. Ein derartiges Porenvolumen gewährleistet eine gute Imprägnierbarkeit bei gleichzeitig ausreichender mechanischer Stabilität des Isolationselements.

In der Regel sollte das Material und der strukturelle Aufbau der wenigstens drei Schichten des Isolationselements derart gewählt werden, dass alle drei Schichten mit einem fliessfähigen und einem elektrisch isolierend wirkenden Material, insbesondere einem im Hochspannungsbereich elektrisch isolierend wirkenden Material, imprägnierbar sind, so dass das Isolationselement seine elektrische Isolationswirkung, insbesondere im Hochspannungsbereich, möglichst optimal wahrnehmen kann.

Gemäss einer Weiterbildung der Erfindung beträgt die Dicke des Isolationselements, welche senkrecht durch die erste und die zweite Schicht sowie die Zwischenschicht hindurch gemessen wird, mindestens 1 mm, bevorzugter mindestens 6 mm und am meisten bevorzugt mindestens 8 mm.

Die Zwischenschicht des Isolationselements weist vorteilhaft eine mittlere Schichtdicke auf von höchstens 2 mm, noch vorteilhafter von höchstens 1 mm und am meisten vorteilhaft von höchstens 400 µm. Vorteilhaft beträgt die mittlere Schichtdicke zudem mindestens 50 µm.

Vorteilhaft weist die erste Schicht und/oder die zweite Schicht eine Schichtdicke auf von 0.5 mm bis 8 mm, insbesondere von 3 mm bis 6 mm.

Gemäss einer Weiterbildung der Erfindung weist das Isolationselement einen Elastizitätsmodul im Bereich von 5 bis 9 GPa auf sowie eine Biegefestigkeit im Bereich von 30 bis 70 MPa (jeweils gemessen gemäss der internationalen Norm IEC 60763-2-9, 2. Ausgabe, 15. Februar 2007). Das Isolationsmodul kann dann insbesondere als selbsttragendes Bauteil optimal eingesetzt werden.

Der pH-Wert des wässrigen Extraktes bei einer gemäss der internationalen Norm IEC 60763-2-17, 2. Ausgabe, 15. Februar 2007, durchgeführten Messung liegt bevorzugt im Bereich von 5 bis 10. Die Leitfähigkeit des wässrigen Extraktes bei einer Messung gemäss IEC 60763-2-16, 2. Ausgabe, 15. Februar 2007, des gesamten Isolationselements liegt vorteilhaft bei höchstens 15 mS/m.

Beim elektrotechnischen Bauelement handelt es sich üblicherweise um einen Bestandteil eines Transformators. Es kann sich aber auch um einen Bestandteil eines anderen elektrotechnischen Bauelements handeln, wie zum Beispiel einer Kompensationsdrossel, eines Spannungswandlers oder eines Phasenschiebers. Falls es sich um einen Bestandteil eines Transformators handelt, kann der Transformator insbesondere ein Trockentransformator (für Gleichstrom oder Wechselstrom) oder ein mit einem fliessfähigen Material, insbesondere einer Flüssigkeit, wie bevorzugt Öl, gefüllter Transformator (synthetische Öle / Ester / mineralische Öle / Naturöle, für Gleichstrom oder Wechselstrom) sein, wobei es sich beim Transformator zudem insbesondere um einen Leistungstransformator, einen Verteiltransformator, einen Schmelz- oder Schweisstransformator, einen Ventil- oder Regeltransformator oder einen Fahrzeugtransformator handeln kann.

Das Isolationselement kann beispielsweise ein Distanzstück, eine Leiste, ein Balken, ein Block, eine Platte, ein Druckring, ein Stab, ein Winkelring, eine Haube, eine Kappe, ein Sektorstutzen, ein Flanschrohr, ein Pressbalken, ein Faltenbalg, eine Schraube, eine Mutter, eine Gewindestange, eine Ausleitung, ein Abstützklotz, ein Schirmring oder ein Rohr sein. Die genannten Isolationselemente finden Anwendung bei Transformatoren.

Ausserdem wird ein Verfahren zur Herstellung eines Isolationselements angegeben, wobei das Isolationselement insbesondere wie oben ausgeführt ausgebildet ist. Das Verfahren weist zumindest den Schritt auf, dass eine Zwischenschicht zwischen einer ersten Schicht, welche Cellulose enthält, und einer zweiten Schicht, welche Cellulose enthält, angeordnet wird. Dabei wird eine Zwischenschicht verwendet, welche mikro- und/oder nanoskalige Cellulose enthält.

Vorteilhaft wird die mikro- und/oder nanoskalige Cellulose diskontinuierlich mit Wasser und / oder mit einem polaren Lösemittel, wie zum Beispiel Ethanol, Methanol etc., zwischen die erste Schicht und die zweite Schicht aufgebracht. Die erste und die zweite Schicht, bei welchen es sich insbesondere jeweils um Transformerboard TIV handeln kann, weisen dabei jeweils bevorzugt einen trockenen Ausgangszustand auf. Die Zwischenschicht enthält in der Regel weder Hemicellulose noch Lignin. Vorteilhaft enthält die Zwischenschicht weniger als 1 % Hemicellulose und / oder weniger als 1 % Lignin bezogen auf das Gesamtgewicht der Zwischenschicht im Trockenzustand. Noch vorteilhafter enthält die Zwischenschicht sogar weder Hemicellulose noch Lignin.

Vorteilhaft werden die erste Schicht, die Zwischenschicht und die zweite Schicht bei einem Pressdruck von 10 N/cm² (Newton pro Quadratzentimeter) bis 600 N/cm², vorteilhafter von 10 N/cm² bis 300 N/cm², noch vorteilhafter von 150 N/cm² bis 250 N/cm², miteinander verpresst. Dieses Verpressen erfolgt üblicherweise bei Raumtemperatur und in der Regel ohne Anlegen eines Vakuums. Besonders vorteilhaft hat sich aber das Verpressen zwischen 50°C und 120°C, insbesondere bei ca. 90°C, erwiesen. Durch das thermische Verpressen, d.h. durch das Verpressen bei einer Temperatur grösser als der Raumtemperatur, insbesondere durch das Verpressen bei den genannten Temperaturen oberhalb der Raumtemperatur, wird die Dimensionsstabilität und/oder die Verklebungsfestigkeit des erfindungsgemässen Isolationselementes verbessert. Durch das Verpressen wird Luft aus dem Isolationselement entfernt, und die Schichten des Isolationselements werden in gegenseitigen Kontakt gebracht und miteinander verbunden.

Anschliessend an das Anordnen der Zwischenschicht zwischen der ersten Schicht und der zweiten Schicht erfolgt bevorzugt eine Trocknung der ersten Schicht, der zweiten Schicht und der Zwischenschicht. Diese Trocknung kann insbesondere thermisch, typischerweise bei Temperaturen unter 150° C, insbesondere unter 120° C, erfolgen. Bei höheren Temperaturen kann je nach Ausbildung des Isolationselements die Gefahr einer Beschädigung bestehen. Zur Trocknung kann aber auch ein beliebiges anderes Trocknungsverfahren, wie zum Beispiel eine Mikrowellentrocknung, eingesetzt werden. Insbesondere bevorzugt erfolgen das Verpressen und die thermische Trocknung gleichzeitig.

Die Sequenz der oben beschriebenen thermischen Verpressung sowie die anschliessende oben beschriebene Trocknung bewirkt den Vorteil, dass die Biegefestigkeit des erfindungsgemässen Isolationselementes erhöht werden kann. Die thermische Trocknung muss zeitlich nicht zwingend unmittelbar nach der thermischen Verpressung stattfinden, sondern kann auch mit einem zeitlichen Abstand erfolgen.

Gemäss einer Weiterbildung der Erfindung werden die erste Schicht, die Zwischenschicht und die zweite Schicht thermisch miteinander verpresst. Thermische Verpressung bedeutet, dass die Verpressung bei einer Temperatur oberhalb der Raumtemperatur erfolgt. Bevorzugt werden die erste Schicht, die Zwischenschicht und die zweite Schicht thermisch bei einem Pressdruck von 10 N/cm² (Newton pro Quadratzentimeter) bis 600 N/cm², bevorzugt von 10 N/cm² bis 300 N/cm², bevorzugter von 150 N/cm² bis 250 N/cm², miteinander verpresst. Das thermische Verpressen erfolgt bevorzugt bei einer Temperatur zwischen 50°C und 120°C, bevorzugter bei ca. 90°C. Durch das thermische Verpressen, insbesondere beim thermischen Verpressen bei den genannten Temperaturen, wird die Dimensionsstabilität und/oder die Verklebungsfestigkeit des erfindungsgemässen Isolationselementes verbessert. Durch das thermische Verpressen kann zusätzlich die genannte bevorzugte Trocknung der ersten Schicht, der zweiten Schicht und der Zwischenschicht, welche anschliessend an das Anordnen der Zwischenschicht zwischen der ersten Schicht und der zweiten Schicht erfolgt, falls diese notwendig sein sollte, vermieden werden, so dass eine kostengünstigere sowie energieärmere Herstellung des erfindungsgemässen Isolationselementes möglich ist. Das thermische Verpressen erfolgt in der Regel ohne Anlegen eines Vakuums. Selbstverständlich kann aber das thermische Verpressen auch unter Anlegen eines Vakuums erfolgen.

Gemäss einer Weiterbildung der Erfindung wird die Zwischenschicht zwischen der ersten Schicht und der zweiten Schicht angeordnet, wobei die angeordnete mikroskalige und / oder nanoskalige Cellulose ein Flächengewicht von 800 g/m² oder weniger, bevorzugt von 20 g/m² - 350 g/m², bevorzugter von 150 g/m² - 300 g/m², noch bevorzugter von ca. 240 g/m² aufweist. Die Zwischenschicht besteht dabei vorteilhaft ausschliesslich aus mikro- und/oder nanoskaliger Cellulose. Hierdurch kann die Stabilität des erfindungsgemässen Isolationselementes gesteigert werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen, in stark schematischer Form:
- Fig. 1: eine perspektivische Ansicht eines mehrlagigen Isolationselements gemäss dem Stand der Technik;
- Fig. 2: eine perspektivische Ansicht einer erfindungsgemässen Ausführungsform eines mehrlagigen Isolationselements;
- Fig. 3: eine von einem Lichtmikroskop angefertigte Aufnahme von reiner mikro- und/oder nanoskalige Cellulose (ARBOCEL^{®} MF 40-10); sowie
- Fig. 4: eine von einem Lichtmikroskop angefertigte Aufnahme von herkömmlichen Zellstofffasern, vermischt mit mikro- und/oder nanoskaliger Cellulose (ARBOCEL^{®} MF 40-10).

### BESCHREIBUNG BEVORZUGTER AUSFÜHRUNGSFORMEN

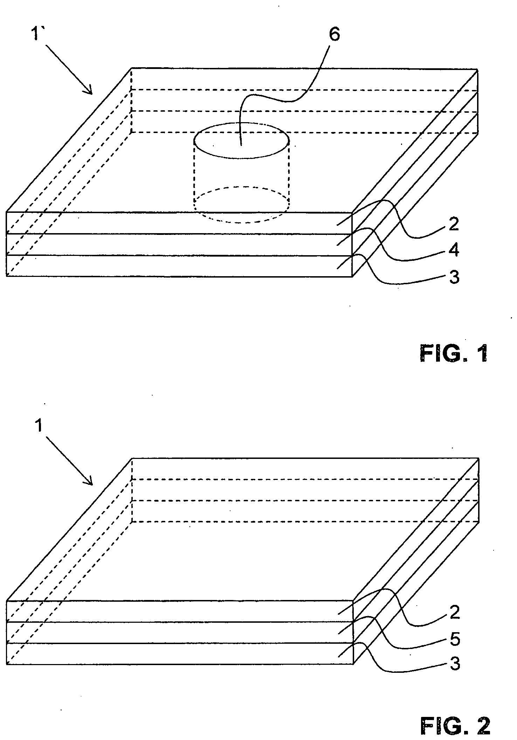

In der Figur 1 ist ein Isolationselement 1' zur elektrischen Isolation eines elektrotechnischen Bauelementes eines Transformators gezeigt, wie es dem Fachmann aus dem Stand der Technik bereits hinlänglich bekannt ist. Das Isolationselement 1' weist einen mehrlagigen Aufbau auf mit einer ersten Schicht 2, einer zweiten Schicht 3 sowie einer Zwischenschicht 4, die zwischen der ersten Schicht 2 und der zweiten Schicht 3 angeordnet ist. Die angegebene Schichtfolge kann sich in einem Isolationselement beliebig oft wiederholen.

Die erste Schicht 2 und die zweite Schicht 3 sind jeweils aus Pressspan hergestellt und bestehen hier ausschliesslich aus Zellstoff. Es handelt sich bei diesen Schichten 2 und 3 insbesondere um das von der Firma Weidmann seit langem produzierte Material "Transformerboard TIV". Der Aufbau dieses Materials sowie dessen Herstellung, welche unter anderem mittels Heisspressen erfolgt, sind dem Fachmann bereits seit langem bekannt.

Die Zwischenschicht 4, welche zum Verbinden und Zusammenhalten der ersten Schicht 2 und der zweiten Schicht 3 dient, enthält im vorliegenden Ausführungsbeispiel des Standes der Technik Caseinkleber oder Polyesterharz. Da beim Imprägnieren des Isolationselements 1' in der Regel weder Caseinkleber noch Polyesterharz für das Transformatorenöl durchlässig sind, sind bei derartigen Isolationselementen 1' des Standes der Technik üblicherweise Imprägnierbohrungen 6 vorgesehen. Diese Imprägnierbohrungen 6, welche in einer grossen Anzahl und in regelmässigen Abständen über das gesamte Isolationselement 1' verteilt sind, erstrecken sich jeweils in senkrechter Richtung durch die erste Schicht 2, die zweite Schicht 3 und die Zwischenschicht 4 hindurch. Durch das Vorsehen der Imprägnierbohrungen 6 im Isolationselement 1' kann eine ausreichende Imprägnierung des Isolationselements 1' mit Transformatorenöl sichergestellt werden. Allerdings führt das Vorsehen von Imprägnierbohrungen 6 während der Herstellung zu einem hohen Bohrerverschleiss. Die Herstellung des Isolationselements 1' dauert wegen den notwendigerweise vorzunehmenden Imprägnierbohrungen zudem länger und ist deshalb auch verhältnismässig teuer. Nachteilig sind ausserdem Mikroluftblasen und Kavitäten, welche im Caseinkleber beziehungsweise im Polyesterharz eingeschlossen werden können, und welche zu unerwünschten Teilentladungen im Isolationselement 1' führen können. Des Weiteren ist die Entsorgung des Isolationselement 1' mit einem gewissen Aufwand verbunden, da dabei die unterschiedlichen Materialien, also das Material der ersten und der zweiten Schicht 2 bzw. 3 sowie der Caseinkleber bzw. das Polyesterharz der Zwischenschicht 4, voneinander getrennt werden müssen. Schliesslich kann aufgrund von Fehlstellen in der Zwischenschicht 4 die durchschnittliche Durchschlagsfestigkeit des Isolationselement 1' beeinträchtigt sein, was ein wesentlicher Nachteil derartiger Isolationselemente 1' darstellt. Isolationselemente 1' des Standes der Technik sind üblicherweise bis höchstens 8 kV/mm teilentladungsfrei.

Ein erfindungsgemässes Ausführungsbeispiel eines Isolationselements 1 zur elektrischen Isolation eines elektrotechnischen Bauelements im Hochspannungsbereich ist in der Figur 2 gezeigt. Das in der Figur 2 gezeigte erfindungsgemässe Ausführungsbeispiel unterscheidet sich von dem in der Figur 1 gezeigten Ausführungsbeispiel des Standes der Technik lediglich dadurch, dass das Isolationselement 1 eine anders ausgebildete Zwischenschicht 5 aufweist als das Isolationselement 1'. Ausserdem weist das in der Figur 2 gezeigte Isolationselement 1 keine Imprägnierbohrungen 6 auf. Gleiche oder ähnlich ausgebildete Elemente sind in den Figuren 1 und 2 jeweils mit denselben Bezugszeichen gekennzeichnet.

Sowohl beim Isolationselement 1' gemäss der in Figur 1 gezeigten Ausführungsform des Standes der Technik als auch bei dem in der Figur 2 gezeigten erfindungsgemässen Isolationselement 1 handelt es sich insbesondere um einen Bestandteil eines ölgefüllten Transformators. Die Isolationselemente 1 bzw. 1' der vorliegenden Ausführungsformen sind beide als flächiges Element ausgebildet.

Die Zwischenschicht 5 des in der Figur 2 gezeigten Isolationselements 1 ist aus mikro- und/oder nanoskaliger Cellulose hergestellt. Dazu wurde beim vorliegenden Ausführungsbeispiel das Produkt ARBOCEL^{®} MF 40-10 der Firma J. Rettenmaier & Söhne GmbH + Co. KG, 73494 Rosenberg, Deutschland mit einem Massenanteil von 15 % Feststoff verwendet. Bei der Herstellung des Isolationselements 1 wird die mikro- und/oder nanoskalige Cellulose zunächst auf eine Oberfläche der ersten Schicht 2 aufgetragen. Die zweite Schicht 3 wird dann auf die mikro- und/oder nanoskalige Cellulose aufgelegt. Die erste Schicht 2, die mikro- und/oder nanoskalige Cellulose und die zweite Schicht 3 werden anschliessend bei einem Pressdruck von ca. 200 N/cm² miteinander verpresst. Anschliessend oder gleichzeitig wird das Isolationselement 1 bei einer Temperatur im Bereich zwischen 100° C und 150° C thermisch getrocknet.

Das Isolationselement 1 weist eine durchschnittliche Dichte von 1.2 g/cm³ bis 1.3 g/cm³ (gemessen nach der Norm IEC 60763-2-10, 2. Ausgabe, 15. Februar 2007) sowie ein Porenvolumen von 10 % bis 20 % auf. Bezogen auf die Trockenmasse des Isolationselements 1 resultiert somit eine Ölabsorption von 10 bis 20 Gew.-% (gemessen nach der Norm IEC 60763-2-13, 2. Ausgabe, 15. Februar 2007). Der Elastizitätsmodul des Isolationselement 1 liegt im Bereich von 5 bis 9 GPa, insbesondere bei ungefähr 7 GPa (gemessen nach der Norm IEC 60763-2-9, 2. Ausgabe, 15. Februar 2007). Die resultierende Biegefestigkeit des Isolationselements 1 liegt beim vorliegenden Ausführungsbeispiel im Bereich von 30 bis 70 MPa, gemessen nach der Norm IEC 60763-2-9, 2. Ausgabe, 15. Februar 2007. Das Isolationselement 1 weist zudem eine thermische Stabilität bis ca. 120° C auf, welche gemäss den folgenden Normen gemessen wurde: IEC 60216-1, 5. Ausgabe 2001 vom 1. Juli 2001; IEC 60216-2, 4. Ausgabe 2005 vom 11. August 2005; IEC 60216-3, 2. Ausgabe 2006 in Verbindung mit COR 1 2009 vom 18. Dezember 2009 von IEC 60216-3, 2. Ausgabe 2006; IEC 60216-4-1, 4. Ausgabe 2006 vom 19. Januar 2006; IEC 60216-4-2, 1. Ausgabe 2000 vom 1.Juli 2000; IEC 60216-4-3, 1. Ausgabe vom 1. April 2000; IEC 60216-5, 3. Ausgabe 2008 in Verbindung mit COR 1 2009 vom 18.12.2009 von IEC 60216-5, 3. Ausgabe 2008; IEC 60216-6, 2. Ausgabe 2006 vom 29.Mai 2006.

Die erste Schicht 2 und die zweite Schicht 3 weisen jeweils eine mittlere Schichtdicke im Bereich von 3 bis 6 mm auf. Die Zwischenschicht 5 ist weniger als 400 µm dick und besteht zu 100 % aus mikro- und/oder nanoskaliger Cellulose. Die aufgetragene mikro- und/oder nanoskalige Cellulose weist dabei ein Flächengewicht von 800 g/m² oder weniger auf.

Der pH-Wert des wässrigen Extraktes bei einer gemäss der internationalen Norm IEC 60763-2-17, 2. Ausgabe, 15. Februar 2007, durchgeführten Messung liegt im Bereich von 5 bis 10. Die Leitfähigkeit des wässrigen Extraktes bei einer Messung des gesamten Isolationselements gemäss der internationalen Norm IEC 60763-2-16, 2. Ausgabe, 15. Februar 2007, liegt bei höchstens 15 mS/m. Beim Isolationselement 1 treten im Bereich von 0 kV/mm bis 12 kV/mm keine Durchschläge oder Teilentladungen auf.

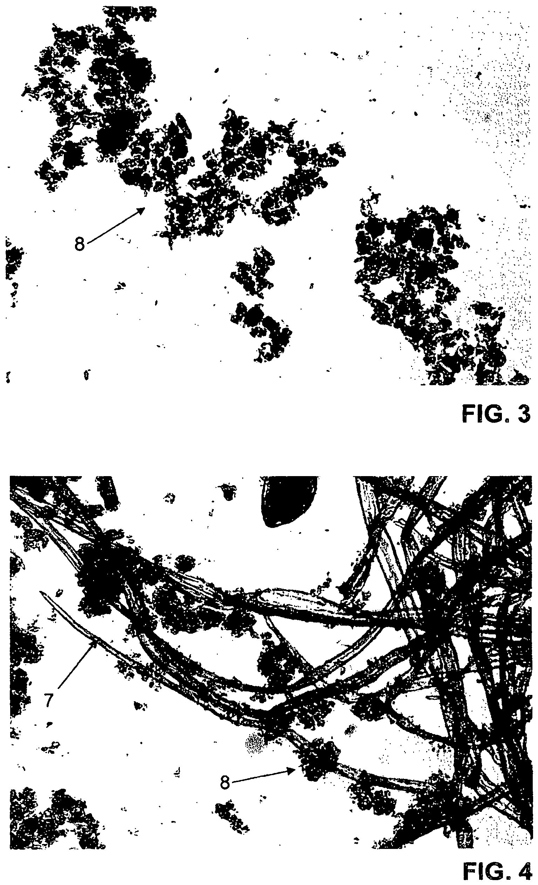

Die Figur 3 zeigt eine Aufnahme eines Lichtmikroskops, in welcher die in der Zwischenschicht 5 verwendete mikro- und/oder nanoskalige Cellulose 8 (ARBOCEL^{®} MF 40-10) in einer stark vergrösserten Darstellung gezeigt ist. Wie aus dieser Abbildung gut erkennbar ist, bilden die zumindest teilweise gelöst voneinander vorliegenden individuellen Mikrofibrillen eine Vielzahl von jeweils knäuelartigen Anhäufungen.

In der Figur 4 ist eine von einem Lichtmikroskop angefertigte Aufnahme von herkömmlichen Zellstofffasern 7, welche mit mikro- und/oder nanoskaliger Cellulose 8 (ARBOCEL^{®} MF 40-10) vermischt sind, in einer stark vergrösserten Darstellung gezeigt. Es ist deutlich erkennbar, dass sich die knäuelartigen Anhäufungen der mikro- und/oder nanoskaligen Cellulose 8 mit gelöst voneinander vorliegenden individuellen Mikrofibrillen an die um ein Vielfaches grösser dimensionierten Zellstofffasern 7 anheften.

Die vorstehende Erfindung ist selbstverständlich nicht auf die vorliegende Ausführungsform gemäss der Figur 2 beschränkt und eine Vielzahl von Abwandlungen ist möglich. So können die erste Schicht 2, die zweite Schicht 3 sowie die Zwischenschicht 5 ausser Cellulose auch beliebige weitere Materialien enthalten. Es ist auch beim erfindungsgemässen Isolationselement der Figur 2 möglich, dass Imprägnierbohrungen und/oder Trocknungsbohrungen vorgesehen sind. Das Isolationselement kann weitere Schichten aufweisen, welche insbesondere Cellulose enthalten können, und welche insbesondere mittels Zwischenschichten, die mikro- und/oder nanoskalige Cellulose enthalten, miteinander verbunden sind. Beim Isolationselement muss es sich nicht zwingend um einen Bestandteil eines Transformators handeln. Das Isolationselement kann auch zur Isolation von anderen elektrotechnischen Bauelementen, wie beispielsweise Kompensationsdrosseln oder Phasenschieber, verwendet werden. Im Falle eines Transformators muss es sich zudem nicht zwingend um einen ölgefüllten Transformator handeln. Das erfindungsgemässe Isolationselement könnte selbstverständlich auch in Trockentransformatoren eingesetzt werden.

**BEZUGSZEICHENLISTE**

| | |
|---|---|
| 1, 1' | Isolationselement |
| 2 | Schicht basierend auf Zellstoff |
| 3 | Schicht basierend auf Zellstoff |
| 4 | Zwischenschicht mit Caseinkleber oder Polyesterharz |
| 5 | Zwischenschicht mit mikro- und/oder nanoskaliger Cellulose |
| 6 | Imprägnierbohrung |
| 7 | Zellstofffaser |
| 8 | Mikro- und/oder nanoskalige Cellulose (ARBOCEL^{®} MF 40-10) |

## Patentansprüche

1. Isolationselement (1) zur elektrischen Isolation eines elektrotechnischen Bauelements im Hochspannungsbereich, aufweisend
eine erste Schicht (2), welche Cellulose enthält,
eine zweite Schicht (3), welche Cellulose enthält, sowie
eine zwischen der ersten Schicht (2) und der zweiten Schicht (3) angeordnete Zwischenschicht (5),
**dadurch gekennzeichnet, dass**
die Zwischenschicht (5) im Trockenzustand mehr als 50Gew.-% mikro- und/oder nanoskalige Cellulose mit zumindest 50 % teilweise oder gänzlich voneinander gelöst vorliegender individuellen Mikrofibrillen enthält, wobei die Längen der individuellen Mikrofibrillen der mikroskaligen Cellulose über einen Bereich zwischen 500 nm und 1000 µm verteilt sind, und wobei die Längen der individuellen Mikrofibrillen der nanoskaligen Cellulose über einen Bereich zwischen 5 nm und 500 nm verteilt sind.

2. Isolationselement (1) nach Anspruch 1, wobei die mikro- und/oder nanoskalige Cellulose dazu dient, die erste Schicht (2) und die zweite Schicht (3) zusammenzuhalten.

3. Isolationselement (1) nach Anspruch 1 oder 2, wobei die Zwischenschicht (5) im Trockenzustand mehr als 75 Gew.-% mikro-und/oder nanoskalige Cellulose enthält.

4. Isolationselement (1) nach einem der vorhergehenden Ansprüche, wobei zumindest 70 % der individuellen Mikrofibrillen der mikro- und/oder nanoskaligen Cellulose teilweise oder gänzlich voneinander gelöst vorliegen.

5. Isolationselement (1) nach -einem der vorhergehenden Ansprüche, wobei die erste Schicht (2) und die zweite Schicht (3) im Trockenzustand jeweils mehr als 50 Gew.-%, insbesondere mehr als 75 Gew.-%, Cellulose enthalten.

6. Isolationselement (1) nach einem der vorangehenden Ansprüche, wobei die erste Schicht (2) und/oder die zweite Schicht (3) Zellstoff enthalten.

7. Isolationselement (1) nach einem der vorangehenden Ansprüche, wobei die erste Schicht (2) und/oder die zweite Schicht (3) in Form von Pressplatten vorliegen.

8. Isolationselement (1) nach einem der vorhergehenden Ansprüche, wobei die erste Schicht (2), die zweite Schicht (3) und die Zwischenschicht (5) im Trockenzustand eine gemeinsame durchschnittliche Dichte haben von zumindest 0.8 g/cm³, insbesondere von zumindest 1.2 g/cm³.

9. Isolationselement (1) nach einem der vorhergehenden Ansprüche, wobei die erste Schicht (2), die zweite Schicht (3) und die Zwischenschicht (5) gemeinsam ein durchschnittliches Porenvolumen haben von 5 % bis 40 %, insbesondere von 10 % bis 20 %.

10. Isolationselement (1) nach einem der vorhergehenden Ansprüche, wobei das Isolationselement (1) eine senkrecht durch die erste Schicht (2), die zweite Schicht (3) und die Zwischenschicht (5) hindurch gemessene Dicke von mindestens 6 mm, insbesondere von mindestens 8 mm aufweist.

11. Isolationselement (1) nach einem der vorhergehenden Ansprüche, wobei die Zwischenschicht (5) eine mittlere Schichtdicke aufweist von höchstens 1 mm, insbesondere von höchstens 400 µm.

12. Isolationselement (1) nach einem der vorhergehenden Ansprüche, wobei die erste Schicht (2) und/oder die zweite Schicht (3) eine Schichtdicke aufweist von 0.5 mm bis 8 mm, insbesondere von 3 mm bis 6 mm.

13. Isolationselement (1) nach einem der vorhergehenden Ansprüche, wobei es sich beim elektrotechnischen Bauelement um einen Bestandteil eines Transformators handelt.

14. Transformator aufweisend zumindest ein Isolationselement (1) nach einem der vorhergehenden Ansprüche.

15. Verfahren zur Herstellung eines Isolationselements (1), das zur elektrischen
Isolation eines elektrotechnischen Bauelements im Hochspannungsbereich dient,
wobei eine Zwischenschicht (5) zwischen einer ersten Schicht (2), welche Cellulose enthält, und einer zweiten Schicht (3), welche Cellulose enthält, angeordnet wird,
**dadurch gekennzeichnet, dass**
die Zwischenschicht (5) im Trockenzustand mehr als 50 Gew.-% mikro- und/oder nanoskalige Cellulose mit zumindest 50 % teilweise oder gänzlich voneinander gelöst vorliegender individuellen Mikrofibrillen enthält, wobei die Längen der individuellen Mikrofibrillen der mikroskäligen Cellulose über einen Bereich zwischen 500 nm und 1000 µm verteilt sind, und wobei die Längen der individuellen Mikrofibrillen der nanoskaligen Cellulose über einen Bereich zwischen 5 nm und 500 nm verteilt sind.

16. Verfahren nach Anspruch 15, wobei die erste Schicht (2), die Zwischenschicht (5) und die zweite Schicht (3) bei einem Pressdruck von 10 N/cm² bis 600 N/cm², bevorzugt von 10 N/cm² bis 300 N/cm², bevorzugter von 150 N/cm² bis 250 N/cm², miteinander verpresst werden.

17. Verfahren nach Anspruch 15 oder 16, wobei anschliessend an das Anordnen der. Zwischenschicht (5) zwischen der ersten Schicht (2) und der zweiten Schicht (3) eine Trocknung der ersten Schicht (2), der zweiten Schicht (3) und der Zwischenschicht (5) erfolgt.

18. Verwendung eines Isolationselements (1) zur elektrischen Isolation eines
elektrotechnischen Bauelements, wobei das Isolationselement (1) aufweist eine erste Schicht (2), welche Cellulose enthält,
eine zweite Schicht (3), welche Cellulose enthält, sowie eine zwischen der ersten Schicht (2) und der zweiten Schicht (3) angeordnete Zwischenschicht (5), welche im Trockenzustand mehr als 50 Gew.-% mikro- und/oder nanoskalige Cellulose mit zumindest 50 % teilweise öder gänzlich Voneinander gelöst vorliegender individuellen Mikrofibrillen enthält, wobei die Längen der individuellen Mikrofibrillen der mikroskaligen Cellulose über einen Bereich zwischen 500 nm und 1000 µm verteilt sind, und wobei die Längen der individuellen Mikrofibrillen der nanoskaligen Cellulose über einen Bereich zwischen 5 nm and 500 nm verteilt sind.

19. Verwendung eines Isolationselements (1) nach Anspruch 18 zur elektrischen Isolation eines elektrotechnischen Bauelements im Hochspannungsbereich.

## Claims

1. An insulation element (1) for electrical insulation of an electro technical component in the high-voltage range, having
a first layer (2), which contains cellulose,
a second layer (3), which contains cellulose, and
an intermediate layer (5) arranged between the first layer (2) and the second layer (3), **characterized in that** the intermediate layer (5) contains more than 50 wt.-% microscale and/or nanoscale cellulose in the dry state with at least 50% of the individual microfibrils partially or entirely detached from one another, wherein the lengths of the individual microfibrils of microscale cellulose are distributed over a range between 500 nm and 1000 µm, and wherein the lengths of the individual microfibrils of nanoscale cellulose are distributed over a range between 5 nm and 500 nm.

2. The insulation element (1) as claimed in claim 1, wherein the microscale and/or nanoscale cellulose is used for the purpose of holding together the first layer (2) and the second layer (3).

3. The insulation element (1) as claimed in claim 1 or 2, wherein the intermediate layer (5) contains more than 75 wt.-% microscale and/or nanoscale cellulose in the dry state.

4. The insulation element (1) as claimed in any one of the preceding claims, wherein at least 70% of the individual microfibrils of the microscale and/or nanoscale cellulose are provided partially or entirely detached from one another.

5. The insulation element (1) as claimed in any one of the preceding claims, wherein the first layer (2) and the second layer (3) each contain more than 50 wt.-%, in particular more than 75 wt.-%, cellulose in the dry state.

6. The insulation element (1) as claimed in any one of the preceding claims, wherein the first layer (2) and/or the second layer (3) contain pulp.

7. The insulation element (1) as claimed in any one of the preceding claims, wherein the first layer (2) and/or the second layer (3) are provided in the form of compressed plates.

8. The insulation element (1) as claimed in any one of the preceding claims, wherein the first layer (2), the second layer (3), and the intermediate layer (5) have a shared average density of at least 0.8 g/cm³, in particular at least 1.2 g/cm³ in the dry state.

9. The insulation element (1) as claimed in any one of the preceding claims, wherein the first layer (2), the second layer (3), and the intermediate layer (5) jointly have an average pore volume of 5% to 40%, in particular 10% to 20%.

10. The insulation element (1) as claimed in any one of the preceding claims, wherein the insulation element (1) has a thickness, measured perpendicularly through the first layer (2), the second layer (3), and the intermediate layer (5), of at least 6 mm, in particular of at least 8 mm.

11. The insulation element (1) as claimed in any one of the preceding claims, wherein the intermediate layer (5) has a mean layer thickness of at most 1 mm, in particular at most 400 µm.

12. The insulation element (1) as claimed in any one of the preceding claims, wherein the first layer (2) and/or the second layer (3) has a layer thickness of 0.5 mm to 8 mm, in particular 3 mm to 6 mm.

13. The insulation element (1) as claimed in any one of the preceding claims, wherein the electrotechnical component is a part of a transformer.

14. A transformer having at least one insulation element (1) as claimed in any one of the preceding claims.

15. A method for producing an insulation element (1), which is used for electrical insulation of an electrotechnical component in the high-voltage range, wherein an intermediate layer (5) is arranged between a first layer (2), which contains cellulose, and a second layer (3), which contains cellulose,
**characterized in that** the intermediate layer (5) contains more than 50 wt.-% microscale and/or nanoscale cellulose in the dry state with at least 50% of the individual microfibrils partially or entirely detached from one another, wherein the lengths of the individual microfibrils of microscale cellulose are distributed over a range between 500 nm and 1000 µm, and wherein the lengths of the individual microfibrils of nanoscale cellulose are distributed over a range between 5 nm and 500 nm.

16. The method as claimed in claim 15, wherein the first layer (2), the intermediate layer (5), and the second layer (3) are compressed with one another at a compression pressure of 10 N/cm² to 600 N/cm², preferably 10 N/cm² to 300 N/cm², more preferably 150 N/cm² to 250 N/cm².

17. The method as claimed in claim 15 or 16, wherein, subsequently to the arrangement of the intermediate layer (5) between the first layer (2) and the second layer (3), drying of the first layer (2), the second layer (3), and the intermediate layer (5) is performed.

18. The use of an insulation element (1) for electrical insulation of an electrotechnical component, wherein the insulation element (1) has
a first layer (2), which contains cellulose,
a second layer (3), which contains cellulose, and
an intermediate layer (5) arranged between the first layer (2) and the second layer (3), which contains more than 50 wt.-% microscale and/or nanoscale cellulose in the dry state with at least 50% of the individual microfibrils partially or entirely detached from one another, wherein the lengths of the individual microfibrils of microscale cellulose are distributed over a range between 500 nm and 1000 µm, and wherein the lengths of the individual microfibrils of nanoscale cellulose are distributed over a range between 5 nm and 500 nm.

19. The use of an insulation element (1) as claimed in claim 18 for electrical insulation of an electrotechnical component in the high-voltage range.

## Revendications

1. Un élément d'isolation (1) pour l'isolation électrique d'un élément de construction électrotechnique dans la plage de haute tension, comprenant
une première couche (2) qui contient de la cellulose,
une deuxième couche (3) qui contient de la cellulose, ainsi que
une couche intermédiaire (5) disposée entre la première couche (2) et la deuxième couche (3),
cacactérisé en ce que
la couche intermédiaire (5) contient, à l'état sec, au-delà de 50% en masse de la cellulose à l'échelle du micromètre et/ou du nanomètre avec au moins 50% des micro-fibrilles individuelles partiellement ou entièrement détachées l'une de l'autre, où les longueurs des micro-fibrilles individuelles de la cellulose à l'échelle du micromètre sont distribuées sur une plage entre 500 nm et 1000 µm, et où les longueurs des micro-fibrilles individuelles de la cellulose à l'échelle du nanomètre sont distribuées sur une plage entre 5 nm et 500 nm.

2. Un élément d'isolation (1) selon la revendication 1, dans lequel la cellulose à l'échelle du micromètre et/ou du nanomètre sert à unir la première couche (2) à la deuxième couche (3).

3. Un élément d'isolation (1) selon la revendication 1 ou 2, où la couche intermédiaire (5) contient, à l'état sec, au-delà de 75% en masse de cellulose à l'échelle du micromètre et/ou du nanomètre.

4. Un élément d'isolation (1) selon une des revendications précédentes, où au moins 70% des micro-fibrilles individuelles de la cellulose à l'échelle du micromètre et/ou nanomètre sont présentes partiellement ou entièrement détachées l'une de l'autre.

5. Un élément d'isolation (1) selon une des revendications précédentes, où la première couche (2) et la deuxième couche (3) contiennent, à l'état sec, respectivement au-delà de 50% en masse, en particulier au-delà de 75% en masse de cellulose.

6. Un élément d'isolation (1) selon une des revendications précédentes, où la première couche (2) et/ou la deuxième couche (3) contiennent de la pâte à papier.

7. Un élément d'isolation (1) selon une des revendications précédentes, où la première couche (2) et/ou la deuxième couche (3) sont présentes en forme de plaques pressées.

8. Un élément d'isolation (1) selon une des revendications précédentes, où la première couche (2), la deuxième couche (3) et la couche intermédiaire (5) ont une densité moyenne commune à l'état sec d'au moins 0,8 g/cm³, en particulier d'au moins 1,2 g/cm³.

9. Un élément d'isolation (1) selon une des revendications précédentes, où la première couche (2), la deuxième couche (3) et la couche intermédiaire (5) ont communément un volume de pores moyen de 5% à 40% , en particulier de 10% à 20%.

10. Un élément d'isolation (1) selon une des revendications précédentes, où l'élément d'isolation (1) présente une épaisseur mesurée de manière perpendiculaire à travers la première couche (2), la deuxième couche (3) et la couche intermédiaire (5) d'au moins 6 mm, en particulier d'au moins 8 mm.

11. Un élément d'isolation (1) selon une des revendications précédentes, où la couche intermédiaire (5) présente une épaisseur de couche moyenne d'au maximum 1 mm, en particulier d'au maximum 400 µm.

12. Un élément d'isolation (1) selon une des revendications précédentes, où la première couche (2) et/ou la deuxième couche (3) présente une épaisseur de couche de 0,5 mm à 8 mm, en particulier de 3 mm à 6 mm.

13. Un élément d'isolation (1) selon une des revendications précédentes, où dans le cas de l'élément de construction électrotechnique, il s'agit d'une partie d'un transformateur.

14. Un transformateur présentant au moins un élément d'isolation (1) selon une des revendications précédentes.

15. Un procédé pour la fabrication d'un élément d'isolation (1), qui sert à l'isolation électrique d'un élément de construction électrotechnique dans la plage de haute tension, où une couche intermédiaire (5) est disposée entre une première couche (2), qui contient de la cellulose, et une deuxième couche (3), qui contient la cellulose,
**caractérisé en ce que**
la couche intermédiaire (5) contient, à l'état sec, au-delà de 50% en masse de la cellulose à l'échelle du micromètre et/ou du nanomètre avec au moins 50% des micro-fibrilles individuelles partiellement ou entièrement détachées l'une de l'autre, où les longueurs des micro-fibrilles individuelles de la cellulose à l'échelle du micromètre sont distribuées sur une plage entre 500 nm et 1000 µm, et où les longueurs des micro-fibrilles individuelles de la cellulose à l'échelle du nanomètre sont distribuées sur une plage entre 5 nm et 500 nm.

16. Un procédé selon la revendication 15, où la première couche (2), la couche intermédiaire (5) et la deuxième couche (3) sont pressées l'une à l'autre à une pression de 10 N/cm² à 600 N/cm², préférablement de 10 N/cm² à 300 N/cm², plus préférablement de 150 N/cm² à 250 N/cm².

17. Un procédé selon la revendication 15 ou 16, où suivant la disposition de la couche intermédiaire (5) entre la première couche (2) et la deuxième couche (3), un séchage de la première couche (2), de la deuxième couche (3) et de la couche intermédiaire (5) est effectué.

18. Une utilisation d'un élément d'isolation (1) pour l'isolation électrique d'un élément de construction électrotechnique, où l'élément d'isolation (1) comprend
une première couche (2), qui contient de la cellulose,
une deuxième couche (3), qui contient de la cellulose, ainsi que une couche intermédiaire (5) disposée entre la première couche (2) et la deuxième couche (3), qui contient, à l'état sec, au-delà de 50% en masse de la cellulose à l'échelle du micromètre et/ou à l'échelle du nanomètre avec au moins 50% des micro-fibrilles individuelles partiellement ou entièrement détachées l'une de l'autre, où les longueurs des micro-fibrilles individuelles de la cellulose à l'échelle du micromètre sont distribuées sur une plage entre 500 nm et 1000 µm, et où les longueurs des micro-fibrilles individuelles de la cellulose à l'échelle du nanomètre sont distribuées sur une plage de 5 nm à 500 nm.

19. Une utilisation de l'élément d'isolation (1) selon la revendication 18 pour l'isolation électrique d'un élément de construction électrotechnique dans la plage de haute tension.
